# EUROPEAN PATENT APPLICATION

(11) **EP 4 206 025 A1**
(43) Date of publication of application: **05.07.2023**
(21) Application number: 21218439.4
(22) Date of filing: 31.12.2021
(51) Int. Cl.: B60L 50/60, B60L 50/64, B60L 53/80, B60L 58/18, B60L 58/20, B60L 58/21, B60L 58/22, B60L 58/26

(54) **BATTERY ASSEMBLY FOR AN ELECTRIC VEHICLE, VEHICLE AND METHOD FOR OPERATING AN ELECTRIC VEHICLE**

(71) Applicant: Volvo Car Corporation, 405 31 Göteborg (SE)
(72) Inventor: BERNICHON, Thomas, 40531 Göteborg (SE); ADAMSSON, Dan, 40531 Göteborg (SE); JOHANSSON, Patrik, 40531 Göteborg (SE); ERIKSSON, Robert, 40531 Göteborg (SE); BERGSTRÖM, Christer, 40531 Göteborg (SE); TOFTEFORS, Ida, 40531 Göteborg (SE)
(74) Representative: Maiwald GmbH

(57) **Abstract**

The disclosure relates to a battery assembly (12) for an electric vehicle. The battery assembly (12) comprises a first battery unit (20), a DC/DC converter (28), and a battery receptacle (22) for selectively receiving a second battery unit (24). The first battery unit (20) is electrically connected to the DC/DC converter (28). Moreover, a first electric connection interface (26) is positioned in the battery receptacle (22) and is electrically connected to the DC/DC converter (28). Additionally, a vehicle comprising such a battery assembly (12) is presented. Furthermore, a method for operating an electric vehicle is explained. A first operational mode comprises electrically connecting the first battery unit (20) to an electric traction machine (16) and electrically connecting the second battery unit (24) to the first battery unit (24). A second operational mode comprises electrically connecting the second battery unit (24) to the electric traction machine (16).

## Description

The present disclosure relates to a battery assembly for an electric vehicle.

Moreover, the present disclosure is directed to a vehicle comprising such a battery assembly.

Additionally, the present disclosure relates to method for operating an electric vehicle.

Electric vehicles having a battery assembly with a first, built-in battery unit are known. Also electric vehicles being additionally configured for receiving a second, swappable battery unit are known.

In such vehicles the driving range can be selectively increased by using the second battery unit in addition to the first battery unit. At the same time, when only a comparatively short driving range is required and the second battery unit is not needed the vehicle has a comparatively low weight. Consequently, it can be operated efficiently.

Normally, the second battery units are not fixedly assigned to one single vehicle or owned by the owner of the vehicle, but rather provided at a service facility where they can be rented if needed. It is clear that a condition of the second battery unit has an influence on the driving performance of the vehicle using it. The condition for example relates to a state of charge or to an age of the second battery unit. However, for most drivers a varying driving performance is not desirable.

It is therefore an objective of the present disclosure to improve known battery assemblies and known vehicles such that a driving performance can be provided which is independent from the specific second battery unit being used.

The problem is at least partially solved or alleviated by the subject matter of the independent claims of the present disclosure, wherein further examples are incorporated in the dependent claims.

According to a first aspect, there is provided a battery assembly for an electric vehicle. The battery assembly comprises a first battery unit, a DC/DC converter, and a battery SE:TOP receptacle for selectively receiving a second battery unit. Moreover, the battery assembly comprises a first electric connection interface for electrically connecting the second battery unit. The first battery unit is electrically connected to the DC/DC converter. The first electric connection interface is positioned in the battery receptacle. Furthermore, the first electric connection interface is electrically connected to the DC/DC converter. In other words, the first electric connection interface and the first battery unit are electrically coupled by the DC/DC converter. In a case in which a second battery unit is arranged in the battery receptacle, the first battery unit and the second battery unit may be electrically coupled by the DC/DC converter. Using the DC/DC converter, potentially differing states of charge and/or potentially differing output voltages of the first battery unit and the second battery unit can be balanced. This leads to an enhanced driving performance of a vehicle being equipped with a battery assembly according to the present disclosure.

In the present disclosure a DC/DC converter is to be understood as a device being configured for transforming a direct current (DC) of a first voltage into a direct current of a second voltage.

In an example, the first battery unit has an electric capacity of 40 kWh and a nominal operational voltage of 400V. The first battery unit may comprise a lithium ion battery.

In an example, the battery assembly comprises a second electric connection interface being configured for electrically connecting the battery assembly to an inverter unit. The first electric connection interface is electrically connected to the second electric connection interface. Consequently, in this configuration, if a second battery unit is used in the battery receptacle, the second battery can be directly connected to the second electric connection interface. In other words, the connection of the second battery unit may bypass the first battery unit and the DC/DC converter. This leads to an enhanced driving performance of an electric vehicle at least in cased where the DC/DC converter would be the limiting component for the driving performance.

In the present disclosure an inverter unit is to be understood as a device being configured for transforming a direct current (DC) into an alternating current (AC) and vice versa.

In an example, the battery assembly may comprise a control unit being communicatively connected to the first electric connection interface. The control unit may be configured for selectively enabling and selectively disabling at least one of the electric connection between the first electric connection interface and the DC/DC converter and the electric connection between the first electric connection interface and the second electric connection interface. Thus, using the control unit, an appropriate electric connection of the first electric connection interface can be chosen, e.g. as a function of a current driving situation and/or as a function of a condition of at least one of the first battery unit and the second battery unit.

In an example, the battery assembly may comprise a third electric connection interface being configured for electrically connecting the battery assembly to an inverter unit. The third electric connection interface may be electrically connected to the first battery unit. Thus, the first battery unit may be electrically connected to an inverter unit via the third electric connection interface.

In an example, the second electric connection interface and the third electric connection interface are formed by a common electric connection interface. Thus, the first battery unit and, if used, the second battery unit may be connected to an inverter unit via the same electric connection interface. In this example, the battery assembly is comparatively simple in design and needs comparatively few components.

In an example, the battery assembly may comprise a second battery unit. The second battery unit may be located in the battery receptacle and may be electrically connected to the first electric connection interface. The electric capacity of such a battery assembly is the sum of the electric capacity of the first battery unit and the second battery unit. As far as the second battery unit is concerned, all the effects and advantages which have already been explained in connection with the possibility to use a second battery unit, apply in the same way. It is noted that the battery receptacle and the second battery unit may be configured such that the second battery unit can be arranged in the battery receptacle by hand or automatically. It is obvious that to this end, the battery receptacle needs to be accessible from an exterior of a vehicle being equipped with the battery assembly according to the present disclosure.

In an example, the second battery unit has an electric capacity of 40 kWh, 60 kWh or 80 kWh. Also the second battery unit may have a nominal operational voltage of 400V. Thus, a magnitude of the increase of the driving range can be selected by choosing a second battery having an appropriate electric capacity and, of course, being sufficiently charged.

In an example, the second battery unit has a predefined geometry such that it can be securely received in the battery receptacle. Additionally, a plurality of second battery units may be configured such that they all have the same, predefined geometry, but different electric capacities. This means that a second battery unit having a comparatively small electric capacity has the same geometric form and size as a second battery unit having a comparatively large electric capacity. This facilitates the reception of battery units of different electric capacities in the battery receptacle. At the same time, a user of the battery assembly has the opportunity to always select a second battery unit having an appropriate electric capacity for an upcoming drive cycle. This enhances the driving efficiency of an electric vehicle using such a battery assembly.

In an example, the battery assembly comprises a cooling system having at least one cooling channel and a cooling interface being fluidically connected to the cooling channel. The cooling interface is arranged in the battery receptacle. Via the cooling interface, the second battery unit can be connected to the cooling system. Consequently, the cooling system can be used to keep a temperature of the second battery unit within a desired range. This leads to a good driving performance of a vehicle using the battery assembly.

According to a second aspect there is provided a vehicle comprising a battery assembly according to the first aspect of the present disclosure, an inverter unit and an electric traction machine. The battery assembly is electrically connected to the inverter unit and the inverter unit is electrically connected to the electric traction machine such that the electric traction machine can be powered by the battery assembly. Such a vehicle has the first battery unit as a built-in battery unit. Using a second battery unit is optional. Thus, in such a vehicle, the driving range can be selectively adapted by choosing an appropriate second battery unit or by deciding not to use a second battery unit. The weight of the vehicle increases together with the driving range. Thus, for drive cycles requiring a comparatively low driving range only, the vehicle is comparatively low-weight and thus can be operated with high efficiency. Due to the effects and advantages as explained above in connection with the battery assembly, the vehicle offers a high and constant driving performance being independent form a condition of the second battery unit.

According to a third aspect, there is provided a method for operating an electric vehicle having a battery assembly comprising a first battery unit and a second battery unit. The battery assembly is electrically connected to an electric traction machine. A first operational mode comprises electrically connecting the first battery unit to the electric traction machine such that electric power flows from the first battery unit to the electric traction machine. Additionally, the first operational mode comprises electrically connecting the second battery unit to the first battery unit such that electric power flows from the second battery unit to the first battery unit. This is a simple and reliable way to provide energy to the electric traction machine and/or a corresponding inverter unit. An alternative or additional second operational mode comprises electrically connecting the second battery unit to the electric traction machine such that electric power flows from the second battery unit to the electric traction machine. In other words, in the first operational mode, the second battery unit charges the first battery unit and the first battery unit is used for propelling the vehicle. In the second operational mode, the second battery unit is directly connected to the electric traction machine. Depending on a current driving situation, one of these operational modes may be used in order to enhance the driving performance. As has been explained before, the second battery unit may be a swappable battery unit.

The method according to the present disclosure may be used in a vehicle according to present disclosure.

In an example, the second operational mode may comprise electrically disconnecting the first battery unit from the electric traction machine and electrically disconnected the first battery unit from the second battery unit. Thus, in this variant of the second operational mode, the electric traction machine is uniquely powered by the second battery unit. Consequently, the full power capacity of the second battery unit can be used without being restrained by potential power limitations of the DC/DC converter. This enhances the driving performance especially in situations where the second battery unit offers a higher performance than the first battery unit.

In another example, the second operational mode may comprise electrically connecting the first battery unit to the electric traction machine such that electric power flows from the first battery unit to the electric traction machine. In this variant of the second operational mode, both the first battery unit and the second battery unit are used for powering the electric traction machine. Only the power being provided by the second battery unit is potentially restrained by a power limitation of the DC/DC converter. Moreover, in such a configuration the DC/DC converter can also be used to equilibrate size differences and power level differences between the first battery unit and the second battery unit. Thus, also in this example, a high driving performance can be achieved.

In a further example, the second operational mode may comprise electrically connecting the first battery unit to the second battery unit such that electric power flows from the first battery unit to the second battery unit. In other words, in this variant of the second operational mode, the first battery unit is used for charging the second battery unit. This configuration offers an additional, redundant way of powering the electric traction machine. This may lead to enhanced reliability.

In an example, the method may comprise assessing a desired energy capacity of the second battery unit based on a planned drive cycle. In this method step, potential side conditions are not yet respected. Rather, the necessary energy capacity is calculated.

In an example, assessing a desired energy capacity may comprise selecting one out of a number of predefined energy capacities. This method step considers circumstances in which only a specific number of second battery units are available, wherein each second battery unit has a predefined electric capacity and/or a predefined state of charge. Thus, the most appropriate alternative is selected which is not necessarily an optimal solution from an objective point of view.

In an example, a second battery unit is inserted into the battery assembly. Thus, a good compromise between electric driving range and vehicle weight can be achieved.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the battery assembly and the vehicle may be combined with features described above with regard to the method.

These and other aspects of the present disclosure will become apparent from and elucidated with reference to the examples described hereinafter.

Examples of the disclosure will be described in the following with reference to the following drawings.
- Fig. 1: shows a vehicle according to the present disclosure comprising a battery assembly according to the present disclosure being operable by a method according to the present disclosure,
- Fig. 2: shows a drivetrain of the vehicle of Figure 1 in a schematic, more detailed representation,
- Fig. 3: shows operational modes of the method according to the present disclosure, and
- Fig. 4: illustrates an aspect of the method of Figure 3.

The figures are merely schematic representations and serve only to illustrate examples of the disclosure. Identical or equivalent elements are in principle provided with the same reference signs.

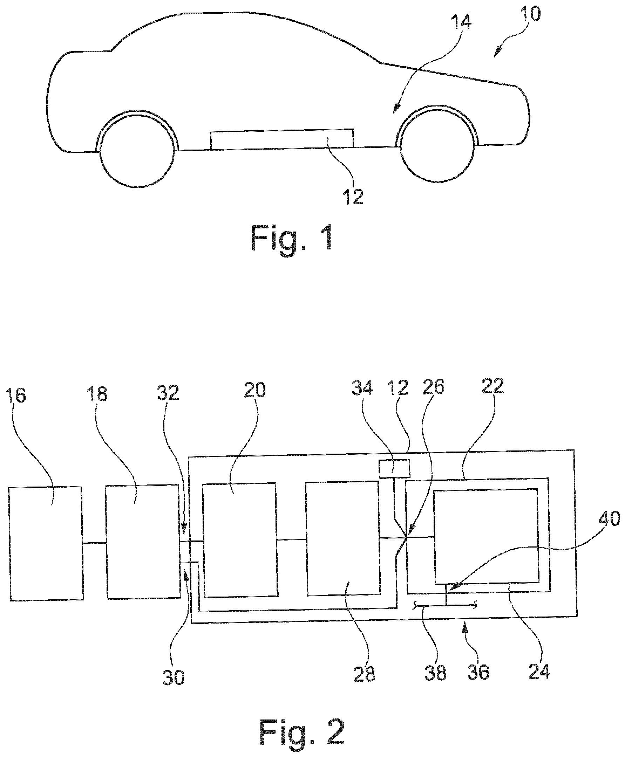

Figure 1 shows a vehicle 10 comprising a battery assembly 12.

The battery assembly 12 is used for propelling the vehicle 10. Thus, the vehicle 10 is an electric vehicle.

Figure 2 shows a drivetrain 14 of the vehicle 10 in more detail.

The drivetrain 14 comprises the battery assembly 12.

Moreover, the drivetrain has an electric traction machine 16 and an inverter unit 18.

The battery assembly 12 is electrically connected to the inverter unit 18 and the inverter unit 18 is electrically connected to the electric traction machine 16. Consequently, the electric traction machine 16 can be powered by the battery assembly 12.

The battery assembly 12 comprises a first battery unit 20.

The first battery unit 20 is fixedly built into the battery assembly 12 and thus in the vehicle 10.

The battery assembly 12 also comprises a battery receptacle 22 for selectively receiving a second battery unit 24.

In the representation of Figure 2, the second battery unit 24 is located in the battery receptacle 22. However, it has to be noted that the drivetrain 14 is also fully operational without the second battery unit 24, i.e. with the battery receptacle 22 being empty.

The battery assembly 12 comprises a first electric connection interface 26 for electrically connecting the second battery unit 24. The first electric connection interface 26 is positioned in the battery receptacle 22.

Since in the example shown in Figure 2, the second battery unit 24 is provided, the second battery unit 24 is electrically connected to the first electric connection interface 26.

The battery assembly also comprises a DC/DC converter 28 which is fixedly built into the battery assembly 12.

The DC/DC converter is electrically connected to the first electric connection interface 26 and to the first battery unit 20.

Thus, the second battery unit 24 and the first battery unit 20 are electrically connected via the DC/DC converter 28.

The battery assembly 12 also comprising a second electric connection interface 30.

The second electric connection interface 30 is configured for electrically connecting the battery assembly 12 to the inverter unit 18, i.e. for making the connection between the battery assembly 12 and the electric traction machine 16.

Moreover, the first electric connection interface 26 and the second electric connection interface 30 are electrically connected.

Furthermore, the battery assembly 12 comprises a third electric connection interface 32.

The third electric connection interface 32 is also configured for electrically connecting the battery assembly 12 to the inverter unit 18. Moreover, the third electric connection interface 32 is electrically connected to the first battery unit 20.

It is noted that the second electric connection interface 30 and the third electric connection interface 32 may also be formed as a common electric connection interface.

However, in the representation of Figure 2 they are configured as separate electric connection interfaces.

Considering the electric connections as described above, the second battery unit 24 can be connected to the inverter unit 18 via the first electric connection interface 26 and the second electric connection interface 30, thereby bypassing the first battery unit 20 and the DC/DC converter 28, or via the first electric connection interface 26, the DC/DC converter 28, the first battery unit 20 and the third electric connection interface 32.

In order to select one of these alternatives, the battery assembly 12 comprises a control unit 34 being communicatively connected to the first electric connection interface 26.

The control unit 34 is configured for selectively enabling and selectively disabling at least one of the electric connection between the first electric connection interface 26 and the DC/DC converter 28 and the electric connection between the first electric connection interface 26 and the second electric connection interface 30.

The battery assembly 12 additionally comprises a cooling system 36 comprises a cooling channel 38.

Moreover, the cooling system 36 comprises a cooling interface 40.

The cooling interface 40 is fluidically connected to the cooling channel 38

The cooling interface 40 is arranged in the battery receptacle 22 such that the second battery unit 24 may be fluidically connected thereto.

Since in the example of Figure 2 the second battery unit 24 is located in the battery receptacle, it is fluidically connected to the cooling system 36 via cooling interface 40.

Consequently, using the cooling system 36 both, the first battery unit 20 and the second battery unit 24 can be maintained within a desired temperature range.

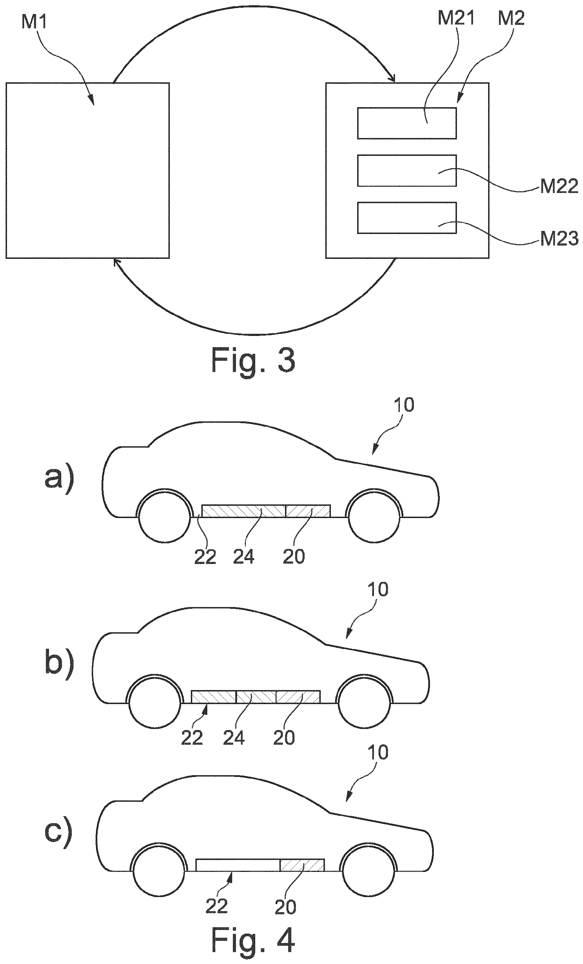

The electric vehicle 10 can be operated by a method for operating an electric vehicle 10 as shown in Figure 3. The steps of the method may at least partially be implemented as executable computer program elements on a data processing device of the control unit 34.

The method comprises a first operational mode M1.

In this first operational mode the first battery unit 20 is electrically connected to the electric traction machine 16 such that electric power flows from the first battery unit 20 to the electric traction machine 16.

Of course, this is done via the inverter unit 18 which is necessary for converting the DC provided by the first battery unit 20 into AC.

At the same time, according to the first operational mode M1, the second battery unit 24 is connected to the first battery unit 20 such that electric power flows from the second battery unit to the first battery unit 20.

In more detail, the second battery unit 24 is connected to the first battery unit 20 via the first electric connection interface 26 and the DC/DC converter 28.

In other words, in the first operational mode M1, the second battery unit 24 is charging the first battery unit 20 and the first battery unit 20 is used for powering the electric traction machine 16.

The method also comprises a second operational mode M2.

The second operational mode M2 comprises electrically connecting the second battery unit 24 to the electric traction machine 16 such that electric power flows from the second battery unit to the electric traction machine 16.

In more detail, the second battery unit 24 is connected to the electric traction machine 16 via the first electric connection interface 26, the second electric connection interface 30 and the inverter unit 18.

In other words, in the second operational mode M2, the electric connection of the second battery unit 24 to the electric traction machine 16 bypasses the first battery unit 20 and the DC/DC converter 28.

In a variant of the second operational mode M21, the first battery unit 20 is electrically disconnected from the electric traction machine 16 and also electrically disconnected from the second battery unit 24. Thus, in this variant, the first battery unit 20 is not used.

In another variant of the second operational mode M22, the first battery unit 20 is electrically connected to the electric traction machine 16 such that electric power flows from the first battery unit 20 to the electric traction machine 16.

In more detail, the first battery unit 20 is connected to the electric traction machine 16 via the third electric connection interface 32 and the inverter unit 18.

In a further variant M23 of the second operational mode M2 the first battery unit 20 is electrically connected to the second battery unit 24 such that electric power flows from the first battery unit 20 to the second battery unit 24.

This electric connection is realized via the DC/DC converter 28 and the first electric connection interface 26.

In other words, in the variant M23 the first battery unit 20 is used for charging the second battery unit 24 and the electric traction machine 16 is powered by the second battery unit 24.

It is understood that while operating the electric vehicle 10, the operational modes M1, M2 as described above may be changed depending on a state of the battery assembly 12 and environmental driving conditions.

It is additionally noted that performing the above described method only is useful if the second battery unit 24 is used.

Prior to the execution of the method steps as described above and relating to the operational modes M1, M2, the method also comprises assessing a desired energy capacity of the second battery unit 24 based on a planned drive cycle.

The planned drive cycle may for example be provided by a navigation unit.

The planned drive cycle especially comprises an information about a travel distance.

Based on this information, a desired energy capacity of the second battery unit 24 may be assessed, in doing so, also preferences of a driver may be respected which for example relate to the fact that charging stops shall be avoided or that the driving time shall be minimized.

Assessing the desired energy capacity also comprise selecting one out of a number of predefined energy capacities which the second battery unit 24 may have.

Once this has been decided, an appropriate second battery unit 24 may be inserted into the battery assembly 12, i.e. into the battery receptacle 22.

In this respect, Figure 4 shows three alternatives. It is assumed that a second battery unit 24 having a comparatively high electric capacity and a second battery unit 24 having a comparatively low electric capacity are provided as options.

The alternative a) may be chosen if the planned drive cycle is associated with a long distance. In this alternative, the second battery unit 24 having the comparatively high electric capacity is arranged in the battery receptacle 22. In this context, the built-in first battery unit 20 may have an electric capacity of 40 kWh and the second battery unit 24 may have an electric capacity of 80 kWh.

In the alternative b) the second battery unit 24 having the comparatively low electric capacity may be considered to be appropriate. Thus, this second electric battery unit 24 is arranged in the battery receptacle 22. Again, the built-in first battery unit 20 may have an electric capacity of 40 kWh. In this alternative, the second battery unit 24 may have an electric capacity of 40 kWh.

In the alternative c) it may be determined that the built-in first battery unit 20 is enough, i.e. that the desired electric capacity of the second battery unit is 0 kWh.

Thus, in any of the above alternatives, the vehicle 10 is equipped with a battery assembly 12 having an appropriate electric capacity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: battery assembly
- 14: drivetrain
- 16: electric traction machine
- 18: inverter unit
- 20: first battery unit
- 22: battery receptacle
- 24: second battery unit
- 26: first electric connection interface
- 28: DC/DC converter
- 30: second electric connection interface
- 32: third electric connection interface
- 34: control unit
- 36: cooling system
- 38: cooling channel
- 40: cooling interface

- M1: first operational mode
- M2: second operational mode
- M21: first variant of second operational mode
- M22: second variant of second operational mode
- M23: third variant of second operational mode

## Claims

1. A battery assembly (12) for an electric vehicle (10), comprising a first battery unit (20), a DC/DC converter (28), a battery receptacle (22) for selectively receiving a second battery unit (24), and a first electric connection interface (26) for electrically connecting the second battery unit (24),
the first battery unit (20) being electrically connected to the DC/DC converter (28), the first electric connection interface (26) being positioned in the battery receptacle (22), and the first electric connection interface (26) being electrically connected to the DC/DC converter (28).

2. The battery assembly (12) according to claim 1, comprising a second electric connection interface (30) being configured for electrically connecting the battery assembly (12) to an inverter unit (18), the first electric connection interface (26) being electrically connected to the second electric connection interface (30).

3. The battery assembly (12) according to claim 2, comprising a control unit (34) being communicatively connected to the first electric connection interface (26), the control unit (34) being configured for selectively enabling and selectively disabling at least one of the electric connection between the first electric connection interface (26) and the DC/DC converter (28) and the electric connection between the first electric connection interface (26) and the second electric connection interface (30).

4. The battery assembly (12) according to any one of the preceding claims, comprising a third electric connection interface (32) being configured for electrically connecting the battery assembly (12) to an inverter unit (18), the third electric connection interface (32) being electrically connected to the first battery unit (20).

5. The battery assembly (12) according to claim 2 and claim 4, wherein the second electric connection interface (30) and the third electric connection interface (32) are formed by a common electric connection interface.

6. The battery assembly (12) according to any one of the preceding claims, comprising the second battery unit (24), the second battery unit (24) being located in the battery receptacle (22) and being electrically connected to the first electric connection interface (26).

7. The battery assembly (12) according to any one of the preceding claims, comprising a cooling system (36) having at least one cooling channel (38) and a cooling interface (40) being fluidically connected to the cooling channel (38), the cooling interface (40) being arranged in the battery receptacle (22).

8. A vehicle (10) comprising a battery assembly (12) according to any one of the preceding claims, an inverter unit (18) and an electric traction machine (16), the battery assembly (12) being electrically connected to the inverter unit (18) and the inverter unit (18) being electrically connected to the electric traction machine (16) such that the electric traction machine (16) can be powered by the battery assembly (12).

9. A method for operating an electric vehicle (10) having a battery assembly (12) comprising a first battery unit (20), and a second battery unit (24), the battery assembly (12) being electrically connected to an electric traction machine (16), wherein
- a first operational mode (M1) comprises electrically connecting the first battery unit (20) to the electric traction machine (16) such that electric power flows from the first battery unit (20) to the electric traction machine (16), and electrically connecting the second battery unit (24) to the first battery unit (20) such that electric power flows from the second battery unit (24) to the first battery unit (20) and/or
- a second operational mode (M2) comprises electrically connecting the second battery unit (24) to the electric traction machine (16) such that electric power flows from the second battery unit (24) to the electric traction machine (16).

10. The method according to claim 9, wherein the second operational mode (M2) comprises electrically disconnecting the first battery unit (20) from the electric traction machine (16) and electrically disconnected the first battery unit (20) from the second battery unit (24).

11. The method according to claim 9, wherein the second operational mode (M2) comprises electrically connecting the first battery unit (20) to the electric traction machine (16) such that electric power flows from the first battery unit (20) to the electric traction machine (16).

12. The method according to claim 9, wherein the second operational mode (M2) comprises electrically connecting the first battery unit (20) to the second battery unit (24) such that electric power flows from the first battery unit (20) to the second battery unit (24).

13. The method according to any one of claim 9 to 12, comprising assessing a desired energy capacity of the second battery unit (24) based on a planned drive cycle.

14. The method according to claim 13, wherein assessing a desired energy capacity comprises selecting one out of a number of predefined energy capacities.

15. The method according to any claim 13 or 14, comprising inserting a second battery unit (24) into the battery assembly (12).

## Amended claims

### Amended claims in accordance with Rule 137(2) EPC.

1. A battery assembly (12) for propelling an electric vehicle (10), comprising a first battery unit (20), a DC/DC converter (28), a battery receptacle (22) for selectively receiving a second battery unit (24), and a first electric connection interface (26) for electrically connecting the second battery unit (24),
the first battery unit (20) being electrically connected to the DC/DC converter (28),
the first electric connection interface (26) being positioned in the battery receptacle (22),
the first electric connection interface (26) being electrically connected to the DC/DC converter (28),
wherein the battery assembly (12) further comprises a second electric connection interface (30) being configured for electrically connecting the battery assembly (12) to an inverter unit (18), the first electric connection interface (26) being electrically connected to the second electric connection interface (30),
**characterized by** a control unit (34) being communicatively connected to the first electric connection interface (26), the control unit (34) being configured for selectively enabling and selectively disabling the electric connection between the first electric connection interface (26) and the DC/DC converter (28).

2. The battery assembly (12) according to claim 1, wherein the control unit (34) is configured for selectively enabling and selectively disabling the electric connection between the first electric connection interface (26) and the second electric connection interface (30).

3. The battery assembly (12) according to any one of the preceding claims, comprising a third electric connection interface (32) being configured for electrically connecting the battery assembly (12) to an inverter unit (18), the third electric connection interface (32) being electrically connected to the first battery unit (20).

4. The battery assembly (12) according to claim 3, wherein the second electric connection interface (30) and the third electric connection interface (32) are formed by a common electric connection interface.

5. The battery assembly (12) according to any one of the preceding claims, comprising the second battery unit (24), the second battery unit (24) being located in the battery receptacle (22) and being electrically connected to the first electric connection interface (26).

6. The battery assembly (12) according to any one of the preceding claims, comprising a cooling system (36) having at least one cooling channel (38) and a cooling interface (40) being fluidically connected to the cooling channel (38), the cooling interface (40) being arranged in the battery receptacle (22).

7. A vehicle (10) comprising a battery assembly (12) according to any one of the preceding claims, an inverter unit (18) and an electric traction machine (16), the battery assembly (12) being electrically connected to the inverter unit (18) and the inverter unit (18) being electrically connected to the electric traction machine (16) such that the electric traction machine (16) can be powered by the battery assembly (12).

8. A method for operating an electric vehicle (10) having a battery assembly (12) comprising a first battery unit (20), and a second battery unit (24), the battery assembly (12) being electrically connected to an electric traction machine (16), wherein
- a first operational mode (M1) comprises electrically connecting the first battery unit (20) to the electric traction machine (16) such that electric power flows from the first battery unit (20) to the electric traction machine (16), and electrically connecting the second battery unit (24) to the first battery unit (20) such that electric power flows from the second battery unit (24) to the first battery unit (20) and/or
- a second operational mode (M2) comprises electrically connecting the second battery unit (24) to the electric traction machine (16) such that electric power flows from the second battery unit (24) to the electric traction machine (16),
the method further comprising:
- assessing a desired energy capacity of the second battery unit (24) based on a planned drive cycle, wherein assessing the desired energy capacity comprises selecting one out of a number of predefined energy capacities, and
- inserting a second battery unit (24) into the battery assembly (12), wherein the second battery unit (24) has a predefined geometry such that it can be securely received in the battery receptacle (22).

9. The method according to claim 8, wherein the second operational mode (M2) comprises electrically disconnecting the first battery unit (20) from the electric traction machine (16) and electrically disconnected the first battery unit (20) from the second battery unit (24).

10. The method according to claim 8, wherein the second operational mode (M2) comprises electrically connecting the first battery unit (20) to the electric traction machine (16) such that electric power flows from the first battery unit (20) to the electric traction machine (16).

11. The method according to claim 8, wherein the second operational mode (M2) comprises electrically connecting the first battery unit (20) to the second battery unit (24) such that electric power flows from the first battery unit (20) to the second battery unit (24).
